(19) Europäisches Patentamt
European Patent Office
Office européen des brevets

(11) EP 2 429 074 A2

(12) **EUROPEAN PATENT APPLICATION**

(43) Date of publication:
**14.03.2012 Bulletin 2012/11**

(51) Int Cl.:
***H02P 29/02*** (2006.01) ***H02P 21/14*** (2006.01)

(21) Application number: **11177402.2**

(22) Date of filing: **12.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.09.2010 JP 2010201743**

(71) Applicant: **Hitachi Car Engineering Co., Ltd.**
**Hitachinaka-shi,**
**Ibaraki 312-0062 (JP)**

(72) Inventors:
- **Ota, Hiroyuki**
  **Ibaraki, 312-0062 (JP)**
- **Nojiri, Yuukou**
  **Ibaraki, 312-0062 (JP)**
- **Suzuki, Ippei**
  **Ibaraki, 312-0062 (JP)**
- **Noda, Junichi**
  **Ibaraki, 312-0062 (JP)**

(74) Representative: **Beetz & Partner**
**Patentanwälte**
**Steinsdorfstrasse 10**
**80538 München (DE)**

(54) **Brushless motor control device and brushless motor system**

(57) Provided are a brushless motor control device (3) and a brushless motor system capable of preventing impossibility of intended control of a brushless motor (4) resulting from false recognition that the brushless motor (4) is in operation in spite of stoppage of the brushless motor (4). A brushless motor control unit (302) calculates a voltage instruction, representing voltages to be applied to the brushless motor (4), according to a control instruction supplied from an upper control device (12). A position error calculation unit (306) calculates and estimates a position error between d-q-axes and dc-qc-axes as rotational coordinate axes by use of the voltage instruction outputted by the brushless motor control unit (302), current values acquired by a coordinate transformation unit (305) and revolution speed for control of the brushless motor (4). A fault detection unit (308) judges whether the brushless motor (4) is faulty or not based on the position error calculated by the position error calculation unit (306).

FIG. 2

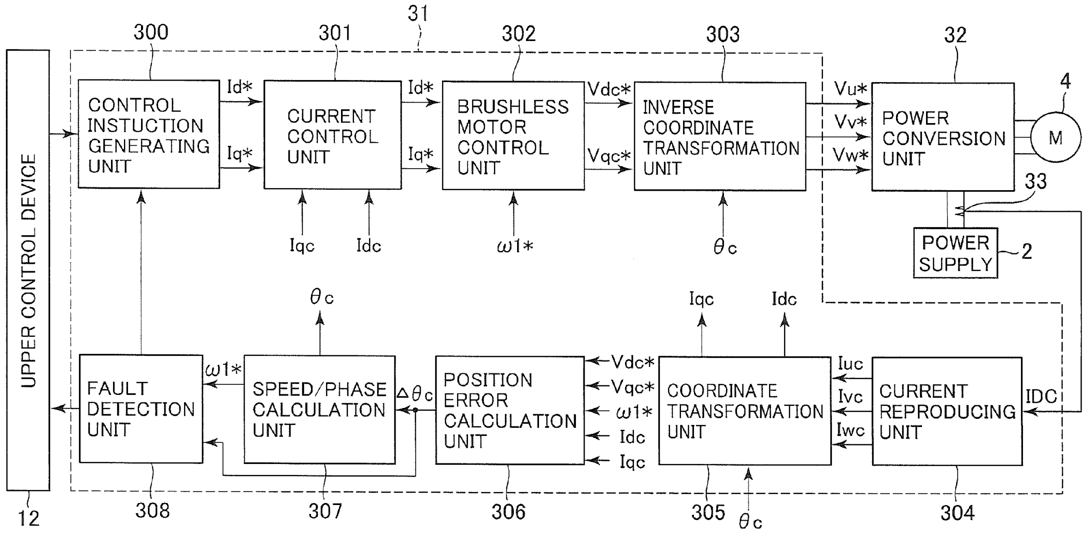


EP 2 429 074 A2

## Description

BACKGROUND OF THE INVENTION

1. Field of the Invention

The present invention relates to a brushless motor control device and a brushless motor system. The invention more specifically relates to a brushless motor control device and a brushless motor system suitable for sensorless control not using a sensor for detecting the rotor position of a brushless motor.

2. Description of the Related Art

Hybrid vehicles (driven by a gasoline engine and an electric motor) and idling stop vehicles (stopping the engine when the vehicle stops) are well known to be effective for improving the mileage (fuel efficiency) and alleviating environmental problems. Such a vehicle is equipped with a mechanical oil pump (driven by the driving force of the engine) and an electric oil pump (driven by electric power supplied from outside (e.g., battery)) in order to supply necessary hydraulic pressure to the transmission mechanism and the hydraulic pressure controller of the automatic transmission, etc. When the engine is stopped when the vehicle stops at a red light, for example, the mechanical oil pump also stops accordingly. Therefore, the supply of the necessary hydraulic pressure to the automatic transmission, etc. is implemented by activating the electric oil pump which operates independently of the aforementioned driving force of the engine.

In recent years, electric oil pumps driven by a brushless motor are attracting increasing attention from the viewpoint of downsizing and high-temperature durability. To drive the brushless motor, a sensor for detecting the position of the rotor is necessary. In cases where an encoder or a Hall element is installed in the brushless motor as the sensor for detecting the rotor position, heat resistance of the sensor becomes a problem especially when the electric oil pump is used for a vehicle with the brushless motor installed in the high-temperature engine room. Therefore, a lot of position sensorless control techniques, estimating the rotor position without the need of installing the sensor for detecting the rotor position in the brushless motor, have been proposed.

For example, there exists a known technique for executing the sensorless control of a brushless motor by controlling the frequency of the voltages applied to the motor so as to increase/decrease the revolution speed of a virtual rotor position based on the fact that the phase of the back electromotive force estimated from observable quantities (such as the q-axis inductance as an electrical parameter of the motor, the magnitude of the motor current and the frequency of the voltages applied to the motor) represents the axis shift angle (hereinafter referred to as a "position error") between the virtual rotor position on the control rotational coordinates and the unobservable actual rotor position (see JP-2001-251889-A, for example). In this case, the revolution speed for control substantially coincides with the actual revolution speed of the motor when the brushless motor is driven normally without stepping out.

SUMMARY OF THE INVENTION

Brushless motor control devices employing the above position sensorless technology are used for a wide variety of purposes in these years and are being required to drive a brushless motor in a low revolution speed range or a high revolution speed range that was rarely used before. Further, with the diversification of the purposes of use, the load on a brushless motor changes in various ways, and thus the sensorless control has to be implemented even in situations with a high load variation and an excessive load. As above, the brushless motor sensorless control is being required to drive a brushless motor stably even outside the conventional controllable range.

In the technique described in the JP-2001-251889-A, the responsiveness of a frequency calculation unit for calculating the motor voltage application frequency (the frequency of the voltages applied to the motor) from the position error is determined by a control response frequency which has been set previously. Thus, even if the control response frequency is set high so as to realize high trackability to sharp changes in the load on the motor, it is impossible to secure sufficient responsiveness in cases where the actual change in the load is even faster. Meanwhile, there are also cases where the setting of the control response frequency for securing sufficient responsiveness is originally impossible due to a limitation on the control cycle which can be set to the microcomputer employed for the brushless motor control device, stability of the control system, etc. If the control response frequency is set low for this reason, the position error increases, the motor's output torque decreases, and the motor incapable of withstanding the load thereon eventually stops. However, there are cases where the motor voltage application frequency does not drop to 0 (depending on the result of the calculations) even though the motor has stopped actually. Consequently, due to the execution (continuation) of the calculations inside the brushless motor control device in spite of the stoppage of the motor, the motor can be falsely recognized to be in the rotating state and the intended control can become impossible.

It is therefore the primary object of the present invention to provide a brushless motor control device and a brushless motor system capable of preventing the impossibility of the intended control resulting from the false recognition that the brushless motor is in operation in spite of the stoppage of the brushless motor.

(1) In order to achieve the above object, the present invention provides a brushless motor control device for driving and rotating a brushless motor not equipped with a sensor for detecting the brushless motor's rotor position, comprising: a brushless motor control unit which calculates a voltage instruction, representing voltages to be applied to the brushless motor, according to a control instruction supplied from an upper control device; a power conversion unit which converts DC power to three-phase AC power based on the voltage instruction from the brushless motor control unit and supplies the three-phase AC power to the brushless motor; a coordinate transformation unit which executes transformation electric current flowing into the brushless motor into current values as current components on dc-qc-axes as rotational coordinate axes; a position error calculation unit which calculates and estimates a position error between d-q-axes as rotational coordinate axes and the dc-qc-axes by use of the voltage instruction outputted by the brushless motor control unit, the current values acquired by the coordinate transformation unit and revolution speed for control of the brushless motor; and a fault detection unit which judges whether the brushless motor is faulty or not based on the position error calculated by the position error calculation unit.
With this configuration, it becomes possible to prevent the impossibility of the intended control resulting from the false recognition that the brushless motor is in operation in spite of the stoppage of the brushless motor.
(2) Preferably, in the above brushless motor control device, the fault detection unit judges that the brushless motor is faulty when the position error has exceeded a reference value preset for the position error a prescribed number of times or more.
(3) Preferably, in the above brushless motor control device, the fault detection unit outputs a warning signal to the upper control device when the brushless motor is judged to be faulty.
(4) Preferably, in the above brushless motor control device, the fault detection unit causes the brushless motor to restart when the brushless motor is judged to be faulty.
(5) Preferably, in the above brushless motor control device, the fault detection unit causes the brushless motor to stop when the number of times of the restart of the brushless motor is a prescribed number of times or more.
(6) Preferably, in the above brushless motor control device, the fault detection unit judges that the brushless motor is faulty when the position error is more than 60 degrees or less than -60 degrees in the electrical angle.
(7) Preferably, in the above brushless motor control device, the fault detection unit judges that the brushless motor is faulty when the position error exceeds a reference value preset for the position error a prescribed number of times or more in a prescribed time period.
(8) Preferably, in the above brushless motor control device, the fault detection unit starts measuring the prescribed time period when the position error exceeds the reference value for the first time.
(9) Preferably, in the above brushless motor control device, the fault detection unit judges that the brushless motor is faulty when revolution speed of the brushless motor has exceeded a second reference value preset for the revolution speed.
(10) In order to achieve the above object, the present invention also provides a brushless motor system comprising: a brushless motor not equipped with a sensor for detecting the brushless motor's rotor position; and a brushless motor control device for driving and rotating the brushless motor. The brushless motor control device includes: a brushless motor control unit which calculates a voltage instruction, representing voltages to be applied to the brushless motor, according to a control instruction supplied from an upper control device; a power conversion unit which converts DC power to three-phase AC power based on the voltage instruction from the brushless motor control unit and supplies the three-phase AC power to the brushless motor; a coordinate transformation unit which executes transformation electric current flowing into the brushless motor into current values as current components on dc-qc-axes as rotational coordinate axes; a position error calculation unit which calculates and estimates a position error between d-q-axes as rotational coordinate axes and the dc-qc-axes by use of the voltage instruction outputted by the brushless motor control unit, the current values acquired by the coordinate transformation unit and revolution speed for control of the brushless motor; and a fault detection unit which judges whether the brushless motor is faulty or not based on the position error calculated by the position error calculation unit.

With this configuration, it becomes possible to prevent the impossibility of the intended control resulting from the false recognition that the brushless motor is in operation in spite of the stoppage of the brushless motor.
The present invention makes it possible to prevent the impossibility of the intended control resulting from the false recognition that the brushless motor is in operation in spite of the stoppage of the brushless motor.

BRIEF DESCRIPTION OF THE DRAWINGS

Fig. 1 is a block diagram showing the overall configuration of an electric oil pump system employing a brushless motor control device in accordance with an embodiment of the present invention.

Fig. 2 is a block diagram showing the configuration of a brushless motor system employing the brushless motor control device in accordance with an embodiment of the present invention.

Fig. 3 is an explanatory view for explaining the position error occurring in the brushless motor control device realizing the position sensorless control estimating the rotor position of the brushless motor.

Fig. 4 is a flow chart showing the operation of a fault detection unit employed for the brushless motor control device in accordance with an embodiment of the present invention.

Fig. 5 is a timing chart showing the operation of the fault detection unit employed for the brushless motor control device in accordance with an embodiment of the present invention.

DESCRIPTION OF THE PREFERRED EMBODIMENTS

In the following, the configuration and operation of a brushless motor control device in accordance with an embodiment of the present invention will be described with reference to Figs. 1 - 5.

First, the overall configuration of an electric oil pump system employing the brushless motor control device in accordance with this embodiment will be explained referring to Fig. 1.

Fig. 1 is a block diagram showing the overall configuration of the electric oil pump system employing the brushless motor control device in accordance with an embodiment of the present invention.

The electric oil pump system 1 comprises a brushless motor control device 3 and an electric oil pump unit 6. The electric oil pump unit 6 includes a brushless motor 4 and an electric oil pump 5. The brushless motor control device 3 controls the rotation of the brushless motor 4. The electric oil pump 5 is driven by driving force from the output shaft of the brushless motor 4. The electric oil pump system 1 pumps up oil accumulated in an oil pan 7 under an automatic transmission 11 by use of the electric oil pump 5 and supplies the pumped oil to a switching valve mechanism 9 via an oil line L1.

The electric oil pump system 1 controls the operation of the electric oil pump unit 6 according to a control instruction supplied from an upper control device 12. The brushless motor control device 3 controls the driving of the electric oil pump unit 6 according to the control instruction from the upper control device 12.

The electric oil pump system 1, which is properly activated when the engine stopped or when necessary hydraulic pressure can not be secured by a mechanical oil pump 8, is used for supplying the hydraulic pressure to tightening mechanisms such as the brakes and the clutch in the automatic transmission 11, for example.

The upper control device 12 receives a signal from a revolution sensor for detecting the input revolution speed of the automatic transmission, a signal from a shift sensor for detecting the shift range of the shift lever (used by the driver of the vehicle for operating the automatic transmission), etc. Based on the signals, the upper control device 12 generates the control instruction for operating the electric oil pump unit 6 and transmits the control instruction to the brushless motor control device 3. At the same time, the upper control device 12 also transmits oil temperature information, inputted from oil temperature sensors installed in the automatic transmission 11 and a hydraulic pressure circuit 10, to the brushless motor control device 3. The upper control device 12 also has a function of receiving revolution speed information and failure information (fault information) from the brushless motor control device 3.

A power supply 2 (electricity storage unit such as a battery) is connected to the brushless motor control device 3 to supply DC power thereto. A three-phase synchronous motor is used as the brushless motor 4. Therefore, the brushless motor control device 3 converts the DC power supplied from the power supply 2 to three-phase AC power and supplies the three-phase AC power to the brushless motor 4, as will be explained later referring to Fig. 2.

Meanwhile, the mechanical oil pump 8 is provided in parallel with the electric oil pump 5. The mechanical oil pump 8 is capable of supplying high-pressure oil by use of driving force from the engine, etc. The mechanical oil pump 8 pumps up the oil accumulated in the oil pan 7 and supplies the pumped oil to the switching valve mechanism 9 via an oil line L2.

The switching valve mechanism 9 executes pressure control and supply/discharge switching of the hydraulic oil supplied/discharged to/from the tightening mechanisms such as the brakes and the clutch in the automatic transmission 11, while supplying oil necessary for the lubrication and cooling of the hydraulic pressure circuit 10, the automatic transmission 11, etc. Hydraulic pressure entering the switching valve mechanism 9 at a prescribed pressure level or higher is supplied to the automatic transmission 11 via the hydraulic pressure circuit 10 and an oil line L3. Incidentally, the hydraulic pressure circuit 10 may be used together with a hydraulic pressure circuit of the automatic transmission 11.

The automatic transmission 11 is equipped with an oil temperature sensor for detecting the temperature of the oil and revolution speed sensors for detecting the revolution speeds of the input shaft, output shaft, etc. of the automatic transmission 11. Signals representing the oil temperature detected by the oil temperature sensor and the revolution speeds detected by the revolution speed sensors are transmitted to the upper control device 12.

Next, the operation of the electric oil pump system 1 will be described below. When the vehicle is running (i.e.,

when the engine is in operation), for example, the oil stored in the oil pan 7 under the automatic transmission 11 is supplied to the switching valve mechanism 9 by the mechanical oil pump 8. The oil from the oil pan 7 flows in the direction of the arrow FP1 to the hydraulic pressure circuit 10 and the automatic transmission 11, by which the oil necessary for the supply of the hydraulic pressure to the tightening mechanisms (clutch, brakes, etc.) and the lubrication and cooling of pertinent parts of the automatic transmission 11 is supplied.

In contrast, when the engine stops (idling stop) when the vehicle stops at a red light, for example, the revolution speed of the mechanical oil pump 8 drops together with the engine revolution speed. Due to a drop in the oil pressure in the oil lines L2 and L3, generating sufficient hydraulic pressure becomes difficult. Therefore, in order to secure sufficient hydraulic pressure supplied to each tightening mechanism even when the engine is stopped, the electric oil pump unit 6 is driven by electric power supplied from the electricity storage unit (e.g., battery).

Thus, upon the idling stop, the upper control device 12 outputs a control instruction for activating the electric oil pump unit 6 to the brushless motor control device 3 in order to control the oil pressure supplied to the hydraulic pressure circuit 10, the automatic transmission 11, etc. Accordingly, the electric oil pump unit 6 starts revolving, feeds the oil in the direction of the arrow FP2, and gradually increases the oil pressure. As the oil pressure of the mechanical oil pump 8 drops due to the stoppage of the engine and the oil pressure of the electric oil pump unit 6 (which has been blocked by the switching valve mechanism 9) exceeds a prescribed threshold value, the oil circulates through the electric oil pump unit 6, the switching valve mechanism 9, the hydraulic pressure circuit 10, the automatic transmission 11, an oil line L4 and the oil pan 7.

Next, the configuration of a brushless motor system employing the brushless motor control device in accordance with this embodiment will be described referring to Fig. 2.

Fig. 2 is a block diagram showing the configuration of the brushless motor system employing the brushless motor control device in accordance with an embodiment of the present invention, wherein reference characters identical with those in Fig. 1 represent the same components as in Fig. 1.

The brushless motor system comprises the upper control device 12, the brushless motor control device 3, the power supply 2 and the brushless motor 4. The brushless motor control device 3 includes a controller 31, a power conversion unit 32 and a current detector 33.

Here, the flux axis of the brushless motor 4 (as a reference axis) is defined as a d-axis (corresponding to the flux axis), an axis orthogonal to the d-axis is defined as a q-axis (corresponding to a torque axis), a virtual flux axis for control is defined as a dc-axis, and an axis orthogonal to the dc-axis is defined as a qc-axis. Further, the axis shift angle (position error) between the d-q-axes and the dc-qc-axes (as rotational coordinate axes), that is, the axis shift angle (position error) between the virtual rotor position θc* for control and the unobservable actual rotor position θc (represented by the phase of the back electromotive force estimated from observable quantities as described in the JP-2001-251889-A) will hereinafter be referred to as a "position error". In the case of the sensorless control which will be explained later, the d-q-axes with reference to the flux axis of the brushless motor 4 and the dc-qc-axes inside the brushless motor control device 3 steadily coincide with each other, by which linearization of the torque generated by the brushless motor, etc. can be realized.

The upper control device 12 outputs the control instruction for driving and rotating the brushless motor 4 (e.g., an intended oil pressure instruction value) and hydraulic oil temperature of the automatic transmission 11 to the controller 31 of the brushless motor control device 3. According to the control instruction from the upper control device 12, the controller 31 outputs voltage instructions Vu*, Vv* and Vw* to the power conversion unit 32. Based on the voltage instructions Vu*, Vv* and Vw* from the controller 31, the power conversion unit 32 converts the DC power from the power supply 2 to three-phase AC power and drives the brushless motor 4 by supplying the three-phase AC power to the three-phase coils of the brushless motor 4.

The current detector 33 detects the DC current which is supplied from the power supply 2 to the power conversion unit 32 to supply electric power to the brushless motor 4 (or the electric oil pump unit 6) as the target of control.

The controller 31 includes a control instruction generating unit 300, a current control unit 301, a brushless motor control unit 302, an inverse coordinate transformation unit 303, a current reproducing unit 304, a coordinate transformation unit 305, a position error calculation unit 306, a speed/phase calculation unit 307 and a fault detection unit 308.

The control instruction generating unit 300 calculates a current instruction Id* regarding the d-axis component (flux axis component) of the brushless motor 4 and a current instruction Iq* regarding the q-axis component (torque axis component) of the brushless motor 4 based on the control instruction from the upper control device 12.

The current control unit 301 calculates second current instructions Id** and Iq** based on the current instruction Id* on the d-axis and the current instruction Iq* on the q-axis calculated by the control instruction generating unit 300 and a current measurement value Idc on the dc-axis and a current measurement value Iqc on the qc-axis acquired by the coordinate transformation unit 305 which will be explained later.

The brushless motor control unit 302 calculates voltage instructions Vdc* and Vqc* on the dc-qc-axes based on the second d-axis current instruction value Id** and the second q-axis current instruction value Iq** calculated by the current control unit 301 and the revolution speed ω1* of the motor calculated by the speed/phase calculation unit 307 which will be explained later.

The inverse coordinate transformation unit 303 transforms the voltage instructions Vdc* and Vqc* on the dc-qc-axes calculated by the brushless motor control unit 302 into values on the three-phase AC axes by use of an AC phase θc inside the brushless motor control device 3 calculated by the speed/phase calculation unit 307 (explained later) and outputs the transformed values to the power conversion unit 32 as U-phase voltage Vu*, V-phase voltage Vv* and W-phase voltage Wu*.

Meanwhile, the current reproducing unit 304 reproduces three-phase AC currents Iuc, Ivc and Iwc (as current values on the three-phase AC axes) based on the measurement value (IDC) of the DC current supplied to the power conversion unit 32 detected by the current detector 33

The coordinate transformation unit 305 transforms the current values Iuc, Ivc and Iwc on the three-phase AC axes reproduced by the current reproducing unit 304 into current values Iqc and Idc of components on the dc-qc-axes (rotational coordinate axes) by use of the AC phase θc inside the brushless motor control device 3 calculated by the speed/phase calculation unit 307 (explained later). The transformed current values Iqc and Idc are supplied to the aforementioned current control unit 301.

The position error calculation unit 306 calculates and estimates the position error Δθc between the d-q-axes of the brushless motor and the dc-qc-axes (control axes) by use of the voltage instructions Vdc* and Vqc* calculated by the brushless motor control unit 302, the AC phase θc inside the brushless motor control device 3 calculated by the speed/phase calculation unit 307 (explained later) and the current measurement values Iqc and Idc of the components on the dc-qc-axes (rotational coordinate axes) acquired by the coordinate transformation unit 305. In short, the position error calculation unit 306 estimates (calculates) the position error Δθc between the d-q-axes and the dc-qc-axes as the rotational coordinate axes (in the case where the flux axis of the brushless motor 4 (reference axis) is defined as the d-axis, an axis orthogonal to the d-axis is defined as the q-axis, the virtual flux axis for control is defined as the dc-axis and an axis orthogonal to the dc-axis is defined as the qc-axis).

The speed/phase calculation unit 307 calculates and estimates the motor revolution speed ω1* and the AC phase θc inside the brushless motor control device 3 based on the position error Δθc calculated by the position error calculation unit 306. The calculated motor revolution speed ω1* is supplied to the brushless motor control unit 302 and the position error calculation unit 306. The calculated AC phase θc inside the brushless motor control device 3 is supplied to the inverse coordinate transformation unit 303.

The fault detection unit 308 makes a judgment on a fault based on the position error Δθccalculated by the position error calculation unit 306. The fault detection unit 308 may make the fault judgment using both the position error Δθc and the motor revolution speed ω1* calculated by the speed/phase calculation unit 307.

Next, the operational principle of the brushless motor system shown in Fig. 2 will be explained in more detail.

The upper control device 12 calculates the control instruction for driving and rotating the brushless motor 4 (e.g., an intended oil pressure instruction value) based on the signal from the revolution sensor (for detecting the input revolution speed of the automatic transmission in order to determine the line pressure for operating the brakes, the clutch of the automatic transmission 11, etc.), the signal from the shift sensor (for detecting the shirt range of the shift lever used by the driver of the vehicle for operating the automatic transmission), etc. The upper control device 12 outputs the calculated control instruction to the brushless motor control device 3. The upper control device 12 also outputs the hydraulic oil temperature (outputted by the oil temperature sensor installed in the automatic transmission 11 for detecting the temperature of the oil) to the brushless motor control device 3.

Incidentally, in cases where the oil pressure generated by the electric oil pump unit 6 can be determined previously, the control instruction value transmitted from the upper control device 12 can be a value specifying the revolution speed of the brushless motor 4.

The control instruction generating unit 300 calculates and outputs the current instruction value Iq* on the q-axis of the brushless motor 4 based on the control instruction (intended oil pressure instruction value) and the hydraulic oil temperature of the automatic transmission 11 sent from the upper control device 12. The current instruction value Iq* on the q-axis is the torque axis component of the brushless motor 4. Incidentally, the q-axis current instruction value Iq* of the brushless motor 4 may be determined by referring to previously stored map data which are used for selecting a current instruction value Iq* on the q-axis corresponding to inputted oil pressure instruction value and hydraulic oil temperature.

Similarly, the control instruction generating unit 300 calculates and outputs the current instruction value Id* on the d-axis of the brushless motor 4 based on the control instruction (intended oil pressure instruction value) and the hydraulic oil temperature of the automatic transmission 11 sent from the upper control device 12. The current instruction value Id* on the d-axis is the flux axis component of the brushless motor 4. The current instruction value Id* on the d-axis is generally set at 0 since it does not contribute to the torque generated by the brushless motor 4. A nonzero current instruction Id* can be issued depending on the control method for the brushless motor 4 (e.g., in the field weakening control or the efficiency maximization control) . The d-axis current instruction value Id* may also be determined by referring to previously stored map data similarly to the q-axis current instruction value Iq*. In this example, the d-axis current instruction value Id* is set at 0 so that torque corresponding to the q-axis current instruction value Iq* (hereinafter referred to also as "control instruction torque") is generated by the brushless motor 4.

The current control unit 301 compares the current measurement value Idc on the dc-axis outputted by the coordinate transformation unit 305 with the current instruction value Id* on the d-axis outputted by the control instruction generating unit 300 and outputs the second current instruction value Id** for controlling the current so as to make the two values Idc and Id* coincide with each other. Similarly, the current control unit 301 compares the current measurement value Iqc on the qc-axis outputted by the coordinate transformation unit 305 with the current instruction value Iq* on the q-axis outputted by the control instruction generating unit 300 and outputs the second current instruction value Iq** for controlling the current so as to make the two values Iqc and Iq* coincide with each other. For example, the current control unit 301 may employ the PI control (proportional-integral control) or the PID control (proportional-integral-derivative control) generally used for current control.

The brushless motor control unit 302 calculates the voltage instructions Vdc* and Vqc* for the brushless motor based on the second d-axis current instruction value Id** and the second q-axis current instruction value Iq** calculated by the current control unit 301 and the motor revolution speed ω1* calculated by the speed/phase calculation unit 307. Specifically, the brushless motor control unit 302 calculates the voltage instructions Vdc* and Vqc* according to the following expressions (1) and (2):

$$Vdc^* = R1^* \cdot ldc - \omega 1^* \cdot Lq^* \cdot Iqc \quad \cdots (1)$$

$$Vqc^* = R1^* \cdot Iqc + \omega 1^* \cdot Ld^* \cdot Idc + Ke \cdot \omega 1 \quad \cdots (2)$$

where "R1*" represents resistance of the winding of the brushless motor, "Ld" represents d-axis inductance, "Lq" represents q-axis inductance, and "Ke" represents an induced voltage constant (back electromotive force constant) of the brushless motor. The expressions (1) and (2) are identical with the operational expressions used for vector control.

The inverse coordinate transformation unit 303 coordinate transforms the voltage instructions Vdc* and Vqc* on the dc-qc-axes calculated by the brushless motor control unit 302 using the expressions (1) and (2) into values on the three-phase AC axes by use of the AC phase θc inside the brushless motor control device 3 calculated by the speed/ phase calculation unit 307. The inverse coordinate transformation unit 303 outputs the transformed values to the power conversion unit 32 as voltage instruction values Vu*, Vv* and Wu* regarding the U-phase, V-phase and W-phase.

The power conversion unit 32 includes switching elements (e.g., MOSFETs (Metal Oxide Semiconductor Field Effect Transistors)) forming a three-phase inverter circuit. The three-phase inverter circuit includes an upper arm switching element and a lower arm switching element for each phase. The power conversion unit 32 converts the three-phase AC voltage instruction values Vu*, Vv* and Wu* into pulse signals and drives prescribed ones of the switching elements based on the pulse signals, by which voltages corresponding to the three-phase AC voltage instructions Vu*, Vv* and Wu* are applied to the brushless motor 4. By switching the energization successively to each phase of the brushless motor 4, electric current can be supplied to each phase and the brushless motor 4 can be driven.

The current reproducing unit 304 reproduces the U-phase current Iuc, the V-phase current Ivc and the W-phase current Iwc passing through the brushless motor 4 based on the DC current IDC supplied from the power supply 2 to the power conversion unit 32 detected by the current detector 33. The reproduced current measurement values Iuc, Ivc and Iwc in the U-phase, V-phase and W-phase are outputted to the coordinate transformation unit 305.

The coordinate transformation unit 305 inversely coordinate transforms the current measurement values Iuc, Ivc and Iwc on the three-phase AC axes (reproduced by the current reproducing unit 304) by use of the AC phase θc inside the brushless motor control device 3 calculated by the speed/phase calculation unit 307 and thereby outputs the current measurement value Idc on the dc-axis and the current measurement value Iqc on the qc-axis.

The position error calculation unit 306 calculates the position error Δθc between the d-q-axes of the brushless motor and the dc-qc-axes (control axes) based on the voltage instruction values Vdc* and Vqc*, the current measurement values Iqc and Idc, the revolution speed ω1* and a brushless motor constant. Specifically, the position error calculation unit 306 calculates the position error Δθc according to the following expression (3):

$$\Delta\theta c = \tan^{-1}((Vdc^* - R1^* \cdot Idc + \omega 1^* \cdot Lq \cdot Iqc)/(Vqc^* - R1^* \cdot Iqc + \omega 1^* \cdot Lq \cdot Idc)) \cdots (3)$$

This expression (3) represents a position error calculation method described in the aforementioned JP-2001-251889-A.

The speed/phase calculation unit 307 calculates and outputs the revolution speed ω1* so that the position error Δθc calculated by the position error calculation unit 306 is reduced to 0. Specifically, the speed/phase calculation unit 307 calculates the revolution speed ω1* according to the following expression (4):

$$\omega 1^* = -\Delta\theta c(KP_{PLL} + (KI_{PLL}/s)) \cdots (4)$$

where "$KP_{PLL}$" represents a proportional gain, "$KI_{PLL}$" represents an integration gain, and "s" represents the Laplace operator. The control gains $KP_{PLL}$ and $KI_{PLL}$ are determined by a control response frequency $\omega C_{PLL}$.

Further, the speed/phase calculation unit 307 calculates and outputs the AC phase θc inside the brushless motor control device 3 by integrating the revolution speed ω1* calculated according to the expression (4). Consequently, the AC phase θc inside the brushless motor control device 3 is corrected by the position error Δθc.

The fault detection unit 308 makes the fault judgment based on the position error Δθc calculated by the position error calculation unit 306. The detailed operation of the fault detection unit 308 will be explained later referring to Figs. 3 - 5.

Next, the position error, which occurs in the brushless motor control device 3 realizing the position sensorless control (estimating the rotor position of the brushless motor), will be explained referring to Fig. 3.

Fig. 3 is an explanatory view for explaining the position error occurring in the brushless motor control device realizing the position sensorless control estimating the rotor position of the brushless motor.

Fig. 3(A) shows the output torque (generated torque) and the load torque of the brushless motor. Fig. 3(B) shows the revolution speed of the brushless motor and the revolution speed ω1* for control. Fig. 3(C) shows the position error Δθc. The horizontal axes in Fig. 3 represent time t.

Referring to Fig. 3, an example of the false recognition (that the brushless motor is in operation even though no back electromotive force is generated in the brushless motor when a sharp load variation has occurred) caused by the continuation of the control calculations inside the brushless motor control device 3 will be explained.

Fig. 3 shows the output torque (generated torque) and the load torque of the brushless motor, the revolution speed of the brushless motor, the revolution speed ω1* for control, and the position error Δθc in a case where the load torque on the brushless motor 4 is higher than the control instruction torque.

It is assumed that a sharp load variation occurred at time t0. Specifically, the load torque increased in a step-like shape (abruptly) as shown in Fig. 3(A), and consequently, the load torque on the brushless motor 4 exceeded the control instruction torque. In this case, the position error Δθc increases upon the occurrence of the load variation as shown in Fig. 3(C).

The load torque can increase in a step-like shape (abruptly) as above when, for example, the engine is restarted after the idling stop in order to start the vehicle. In such cases, the mechanical oil pump 8 is driven by the engine and the oil pressure in the oil line L2 increases gradually. When the oil pressure in the oil line L2 reaches a prescribed pressure, the switching valve mechanism 9 switches the used oil line from the oil line L1 to the oil line L2. Since the electric oil pump unit 6 is still ON when the oil line L1 is closed by the switching valve mechanism 9 for the oil line switching, the load torque rises sharply (in a step-like shape) due to a sudden increase in the oil pressure in the oil line L1. The load torque can increase in a step-like shape (abruptly) also when the electric oil pump unit 6 not filled with the oil is started up. At this point, the electric oil pump unit 6 (electric oil pump 5) races due to an extremely low load thereon. Subsequently, the load on the electric oil pump unit 6 rises sharply (in a step-like shape) at the instant the electric oil pump unit 6 is filled with the oil. As above, such a sharp rise in the load torque occurs frequently in the electric oil pump system 1.

When the load variation is within a normal range (small load variation), the revolution speed ω1* for control is corrected based on the increase in the position error Δθc, by which the position error Δθc converges on 0 within a certain time period (response time determined by the control response frequency $\omega c_{PLL}$).

However, the position error Δθc increases sharply as shown in Fig. 3(C) when a sharp load variation (like the one shown in Fig. 3(A)) has occurred. Consequently, the revolution speed ω1* for control calculated according to the expression (4) decreases quickly as shown in Fig. 3(B). In this case, current components related to the generation of torque decrease since electric currents specified by the instructions don't flow into the d-q-axes. Therefore, the output torque of the brushless motor 4 decreases as shown in Fig. 3(A). This contributes to the slowing down of the revolution speed ω1*, and consequently, the brushless motor 4 incapable of withstanding the overload stops at time t1. In other words, the revolution speed of the brushless motor 4 drops to 0. At the time t1, the position error Δθc is taking on a value higher than usual as shown in Fig. 3(C). However, the calculation of the position error Δθc is continued invariably within the range between ±90 degrees after the stoppage of the brushless motor 4 since the expression (3) holds even after the brushless motor 4 stopped actually. Incidentally, the calculation of the position error Δθc may also be executed in an expanded range between ±180 degrees.

When the calculation of the position error Δθc is executed as above, the revolution speed ω1* for control is also calculated. Since the revolution speed ω1* for control does not coincide with the actual revolution speed of the brushless motor 4 in this case, the brushless motor 4 is falsely recognized to be in the (pseudo) rotating state inside the brushless motor control device. If the control instruction torque changes at this point, the brushless motor 4, which has already stopped, can not follow the control instruction torque. Inside the brushless motor control device 3, however, the brushless motor 4 is judged to have not stopped yet, the calculation is executed based on the control instruction torque, and consequently, intended control becomes impossible.

The position error Δθc taking on a value higher than usual at the time t1 is observed before the intended control becomes impossible. Therefore, the fault detection unit 308 in this embodiment judges whether the brushless motor 4 is falsely recognized to be in the (pseudo) rotating state inside the brushless motor control device or not by use of the position error Δθc.

On the other hand, after the time t1, the revolution speed ω1* for control can take on a wide range of values (even though it changes depending on the load variation), such as a relatively high value close to the upper limit revolution speed of the brushless motor 4, a value over the upper limit revolution speed and a value within the revolution speed range permissible for the driving of the brushless motor 4. Therefore, it is impossible to make the judgment on whether the brushless motor 4 is falsely recognized to be in the (pseudo) rotating state or not by just using the revolution speed ω1* for control.

Next, the operation of the fault detection unit 308 employed for the brushless motor control device 3 in accordance with this embodiment will be described referring to Figs. 4 and 5.

Fig. 4 is a flow chart showing the operation of the fault detection unit 308 employed for the brushless motor control device 3 in accordance with an embodiment of the present invention. Fig. 5 is a timing chart showing the operation of the fault detection unit 308 employed for the brushless motor control device 3 in accordance with an embodiment of the present invention.

The fault detection unit 308 monitors the position error Δθc at prescribed periods (control cycles). Assuming that the position error Δθc increased at the time t1 in Fig. 3 due to a load variation, the fault detection unit 308 detects the increase and judges that the brushless motor control device 3 is falsely judging that the brushless motor 4 is in the (pseudo) rotating state. Specifically, the fault detection unit 308 compares the position error Δθc with a reference value previously set for the position error Δθc and judges that the position error Δθc has increased if the position error Δθc exceeds the reference value. Incidentally, it is also possible to monitor the change in the position error Δθc in a prescribed period and execute the following process by replacing the position error Δθc with the change in the position error Δθc.

The reference value is set as follows, for example: In the case of a brushless motor, the operation of the motor is stable when the position error Δθc is within the range between ±90 degrees. When the position error Δθc goes out of the range, the brushless motor itself becomes unstable and eventually steps out. Even in the field weakening control, the control is executed within a range between ±60 degrees (at which the output torque of the brushless motor is approximately half the maximum torque). Therefore, the reference value (in the absolute value) is set at a value exceeding 60 degrees (outside the range between ±60 degrees). The specific value of the reference value is determined through a real device test, simulation analysis, etc.

Subsequently, the number of occurrences of the position error Δθc exceeding the reference value (previously set for the position error Δθc) is stored. When the stored number exceeds a preset number of occurrences, the fault detection unit 308 judges that a fault has occurred. The preset number of occurrences is determined through a real device test, simulation analysis, etc.

Here, the concrete operation of the fault detection unit 308 will be explained referring to Figs. 4 and 5. Fig. 5 (A) shows the number of occurrences of the position error Δθc exceeding the reference value (position error limit value), Fig. 5(B) shows a warning signal, Fig. 5(C) shows the position error Δθc, Fig. 5(D) shows a fault signal, and Fig. 5(E) shows the number of times of restart. The horizontal axes in Fig. 5 represent time t.

The fault detection unit 308 starts a software timer at preset periods. Specifically, since the calculation of the position error Δθc is executed at preset control cycles, the elapsed time can be measured by counting the number of executions of the calculation. The preset period is approximately 50 ms, for example. Assuming that the control cycle is 1 ms, 50 executions of the calculation correspond to 50 ms. The software timer for measuring the time may also be implemented by preparing a timer that is independent of the control calculation cycle.

In step S1 in Fig. 4, the fault detection unit 308 judges whether the prescribed time period has elapsed or not. If the prescribed time period has elapsed, the process advances to step S9, otherwise the process advances to step S2.

In the step S2 (when the prescribed time period has not elapsed yet in the step S1), the fault detection unit 308 compares the position error $\Delta\theta c$ with a preset position error limit value (the reference value previously set for the position error $\Delta\theta c$). If the position error $\Delta\theta c$ exceeds the position error limit value, the process advances to step S3, otherwise the process advances to step S10.

In the state in which the position error $\Delta\theta c$ is less than the position error limit value (equivalent to normal control of the electric oil pump unit 6 based on the control instruction from the upper control device 12), the normal control is executed in the step S10. In the normal control, the revolution speed $\omega 1^*$ for control is transmitted to the upper control device 12 as the revolution speed of the electric oil pump unit 6. In such a state, the revolution speed $\omega 1^*$ for control coincides with the actual revolution speed of the brushless motor 4 and the position error $\Delta\theta c$ takes on values in the vicinity of 0 since the vector control calculations, etc. are corrected appropriately. Since the brushless motor 4 is currently driven using the control instruction torque determined based on the control instruction from the upper control device 12, the control of the brushless motor can be judged to be in the normal state.

In contrast, when the position error $\Delta\theta c$ exceeds the position error limit value, the output torque of the brushless motor 4 becomes lower than the control instruction torque determined based on the control instruction from the upper control device 12 as explained referring to Fig. 3(A). In such a state, the vector control calculations, etc. have not been corrected appropriately. Thus, the position error $\Delta\theta c$ takes on values not in the vicinity of 0 but relatively great (in the absolute value) within the range between $\pm$90 degrees.

Therefore, when the position error $\Delta\theta c$ exceeds the position error limit value (i.e., in the step S3), the fault detection unit 308 stores the number of occurrences of the position error $\Delta\theta c$ exceeding the position error limit value (the reference value preset for the position error $\Delta\theta c$) and judges whether the stored number of occurrences exceeds a preset number of occurrences (upper limit number of occurrences of position error abnormality) or not. When the number of occurrences does not exceed the upper limit number, the position error $\Delta\theta c$ can take on a value in the vicinity of 0 depending on the next calculation result, and thus the fault detection unit 308 advances to the step S10 while retaining the number of occurrences of the position error $\Delta\theta c$ exceeding the position error limit value.

When the number of occurrences exceeds the position error abnormality upper limit number, the output torque of the brushless motor 4 becomes lower than the control instruction torque determined based on the control instruction from the upper control device 12. In other words, with the brushless motor 4 yielding to the load thereon, the pressure supplied from the electric oil pump unit 6 drops and it becomes impossible to generate sufficient hydraulic pressure for operating the brakes, the clutch of the automatic transmission 11, etc.

Therefore, in step S4, the fault detection unit 308 transmits warning information, indicating that the pressure supplied from the electric oil pump unit 6 is dropping, to the upper control device 12. Even in this case, the revolution speed of the electric oil pump unit 6 is transmitted to the upper control device 12. In the example of Fig. 5, a warning signal is outputted as shown in Fig. 5(B) when the number of occurrences of the position error $\Delta\theta c$ exceeding the position error limit value exceeds the position error abnormality upper limit number (PRESENT NUMBER OF TIMES = 5 in Fig. 5(A)) at time t2 as shown in Fig. 5(A).

In the next step S5, the fault detection unit 308 compares the number of times of execution of a restart process operation (the number of times of retry) with a preset number of times (upper limit number of times of the restart process operation).

When the number of times of execution of the restart process operation is within the upper limit number, the fault detection unit 308 immediately proceeds to the restart process operation (step S8) since the electric oil pump unit 6 is incapable of securing sufficient hydraulic pressure for operating the brakes, the clutch of the automatic transmission 11, etc. Thus, the restart process operation is executed at the time t2 as shown in Fig. 5(E).

In the restart process operation, the calculation processes executed in the brushless motor control device 3 are stopped and then all the data (including the results of the calculation processes) are initialized. Subsequently, the rotor of the brushless motor 4 is moved to a particular position where the output torque is 0 (by energizing prescribed two phases of the brushless motor 4) and is fixed at the position. Then, the energization mode of the brushless motor 4 is changed irrespective of the rotor and the synchronized operation for gradually increasing the revolution speed of the brushless motor 4 is carried out until the control is switched when the sensorless control has become possible. The restart process can be executed by a method described in JP-SHO61-1290-A, for example.

The oil pressure can stay at a sufficiently high level when a sufficient amount of oil remains in the line for supplying the oil pressure. If the electric oil pump unit 6 is restarted in such a state, the electric oil pump unit 6 can yield to the high load and step out. To avoid such a situation, the electric oil pump unit 6 is restarted after waiting for a time period previously set through an experiment, etc. The time period is set at approximately 50 - 100 ms, for example. It is also possible to provide a pressure sensor nearby the discharge outlet of the electric oil pump 5 and restart the electric oil pump unit 6 after the oil pressure detected by the pressure sensor has dropped to an appropriate level.

After the restart process operation is completed, the process advances to the step S10, by which the control is returned to the sensorless control according to the control instruction from the upper control device 12, that is, the normal control.

On the other hand, when the number of times of execution of the restart process operation is judged in the step S5 to exceed the upper limit number, the fault detection unit 308 judges that the electric oil pump unit 6 is incapable of generating sufficient hydraulic pressure for operating the brakes, the clutch of the automatic transmission 11, etc. In this case, the fault detection unit 308 transmits fault information to the upper control device 12 while setting the q-axis current Iq* (control instruction inside the brushless motor control device 3) at 0. In the example of Fig. 5, a fault signal is outputted as shown in Fig. 5(D) when the number of times of restart shown in Fig. 5(E) exceeds the upper limit number at time t3. At the same time, the warning signal is turned OFF as shown in Fig. 5 (B) .

Further, in step S7, the fault detection unit 308 stops the driving of the electric oil pump unit 6 by stopping the output of the three-phase inverter circuit in the power conversion unit 32.

In the step S9 (i.e., when the prescribed time period is judged to have elapsed in the step S1), the fault detection unit 308 clears the number of occurrences stored in the step S3 to 0.

In the step S10, the control in the normal state (normal control) is executed.

Specifically, the position error Δθc which exceeded the position error limit value before the time t0 can thereafter take on a value in the vicinity of 0 depending on the next calculation result as shown in Fig. 5(C), for example. In such cases, the restart process in the step S8 is unnecessary. In consideration of such cases, the restart process (step S8) is not executed when the position error Δθc has exceeded the position error limit value only once. When the brushless motor 4 stops, the position error Δθc repeatedly exceeds the position error limit value as shown in Fig. 5(C) after the time t0, and thus the number of occurrences (of the position error Δθc exceeding the position error limit value) easily exceeds the present number of occurrences (e.g., 5). By making the judgment (step S3) comparing the number of occurrences with the present number of occurrences (upper limit number), execution of an unnecessary restart process can be prevented in such cases where the position error Δθc exceeding the position error limit value before the time t0 can thereafter take on a value in the vicinity of 0 depending on the next calculation result. For this purpose, the number of occurrences is cleared to 0 in the step S9 in cases where the total number of occurrences during the preset time period is within the present number of occurrences.

As described above, in this embodiment, the brushless motor control device 3 (during the execution of the control calculation process) transmits the warning information to the upper control device 12 when the number of occurrences of the position error Δθc exceeding the position error limit value exceeds the present number of occurrences in the preset period. When the restart process operation has been performed more than the preset number of times (upper limit number of times of the restart process operation), the brushless motor control device 3 judges that the electric oil pump unit 6 has failed, and transmits the failure information (fault information) to the upper control device 12 while stopping the electric oil pump unit 6, by which transmission of false information (falsely indicating that the brushless motor 4 is in operation) to the upper control device 12 can be prevented.

Incidentally, while the preset period is repeated regularly irrespective of the magnitude of the position error Δθc in the above explanation, it is also possible to start the measurement of the preset period (elapsed time) when the position error Δθc exceeds a preset reference value. With this method, the time till the fault is judged to have occurred (the time necessary for detecting the fault) can be shortened, that is, delay in the detection of the fault can be eliminated.

While the fault detection unit 308 detects the fault of the brushless motor 4 based on the position error Δθc only in the above explanation, the fault detection unit 308 may also be configured to prevent the false recognition (that the brushless motor 4 is in operation even though the brushless motor 4 is actually stopped) and the impossibility of the intended control by using both the position error Δθc and the revolution speed ω1* for control as input signals as shown in Fig. 2. For example, when the rotor of the brushless motor 4 is locked up, the position error Δθc increases as shown in Fig. 3(C). In this case, the revolution speed ω1* for control (i.e., the frequency of the voltages applied to the motor) drops to 0. However, in order to avoid continuous energization of a particular phase, the phase energized is successively switched while fixing the motor voltage application frequency at a prescribed level. In cases where the fault of the brushless motor 4 has to be discriminated from the locked-up state of the rotor of the brushless motor 4, the fault detection unit 308 may further employ a second reference value preset for the revolution speed ω1* for control. Specifically, the fault detection unit 308 may compare the position error Δθc with a first reference value (preset for the position error Δθc) while also comparing the revolution speed ω1* for control with the second reference value (preset for the revolution speed ω1*) and execute the process from the step S3 only when the revolution speed ω1* is higher than the second reference value and the position error Δθc is also larger than the first reference value. The specific value of the second reference value (preset for the revolution speed ω1*) is determined through a real device test, simulation analysis, etc. The second reference value may be set at approximately 1Hz - 10Hz in frequency, for example.

While the restart process is executed when the number of occurrences of the position error Δθc exceeding the reference value has exceeded a prescribed number of occurrences (e.g., 5) in the above explanation, the prescribed number of occurrences may be set at 1. With this setting, the restart process can be executed immediately after the occurrence of the position error Δθc exceeding the reference value and the control can be quickly returned to the normal control. On the other hand, it is also possible to set the prescribed number of occurrences at 2 or more and thereby prevent the execution of an unnecessary restart process in cases where the position error $\Delta\theta c$ exceeding the position error limit value can thereafter take on a value in the vicinity of 0 depending on the next calculation result.

The present invention is not to be restricted to the particular illustrative embodiment described above. The electric oil pump unit 6 employing a brushless motor as the driving source is applicable not only to the above-described type of vehicles equipped with an automatic transmission but also to hybrid vehicles equipped with a control device for a CVT (Continuously Variable Transmission). The present invention is not to be restricted to electric oil pump systems; the present invention is applicable also to systems employing a brushless motor as the driving source, such as liquid pump systems and systems for driving actuators.

As described above, according to this embodiment, the impossibility of the intended control, resulting from the false recognition (that the brushless motor is in operation even though no back electromotive force is generated in the brushless motor when a sharp load variation has occurred) caused by the continuation of the control calculations inside the brushless motor control device, can be prevented, by which high-reliability driving of an electric oil pump can be realized.

## Claims

**1.** A brushless motor control device (3) for driving and rotating a brushless motor (4) not equipped with a sensor for detecting the brushless motor's rotor position, comprising:

a brushless motor control unit (302) which calculates a voltage instruction, representing voltages to be applied to the brushless motor (4), according to a control instruction supplied from an upper control device (12);
a power conversion unit (32) which converts DC power to three-phase AC power based on the voltage instruction from the brushless motor control unit (302) and supplies the three-phase AC power to the brushless motor (4);
a coordinate transformation unit (305) which executes transformation electric current flowing into the brushless motor (4) into current values as current components on dc-qc-axes as rotational coordinate axes;
a position error calculation unit (306) which calculates and estimates a position error between d-q-axes as rotational coordinate axes and the dc-qc-axes by use of the voltage instruction outputted by the brushless motor control unit (302), the current values acquired by the coordinate transformation unit (305) and revolution speed for control of the brushless motor (4); and
a fault detection unit (308) which judges whether the brushless motor (4) is faulty or not based on the position error calculated by the position error calculation unit (306).

**2.** The brushless motor control device (3) according to claim 1, wherein the fault detection unit (308) judges that the brushless motor (4) is faulty when the position error has exceeded a reference value preset for the position error a prescribed number of times or more.

**3.** The brushless motor control device (3) according to claim 2, wherein the fault detection unit (308) outputs a warning signal to the upper control device (12) when the brushless motor (4) is judged to be faulty.

**4.** The brushless motor control device (3) according to claim 2, wherein the fault detection unit (308) causes the brushless motor (4) to restart when the brushless motor (4) is judged to be faulty.

**5.** The brushless motor control device (3) according to claim 4, wherein the fault detection unit (308) causes the brushless motor (4) to stop when the number of times of the restart of the brushless motor (4) is a prescribed number of times or more.

**6.** The brushless motor control device (3) according to claim 1, wherein the fault detection unit (308) judges that the brushless motor (4) is faulty when the position error is more than 60 degrees or less than -60 degrees in the electrical angle.

**7.** The brushless motor control device (3) according to claim 1, wherein the fault detection unit (308) judges that the brushless motor (4) is faulty when the position error exceeds a reference value preset for the position error a prescribed number of times or more in a prescribed time period.

**8.** The brushless motor control device (3) according to claim 7, wherein the fault detection unit (308) starts measuring the prescribed time period when the position error exceeds the reference value for the first time.

**9.** The brushless motor control device (3) according to claim 2, wherein the fault detection unit (308) judges that the brushless motor (4) is faulty when revolution speed of the brushless motor (4) has exceeded a second reference value preset for the revolution speed.

**10.** A brushless motor system comprising:

a brushless motor (4) not equipped with a sensor for detecting the brushless motor's rotor position; and
a brushless motor control device (3) for driving and rotating the brushless motor (4),
wherein the brushless motor control device (3) includes:

a brushless motor control unit (302) which calculates a voltage instruction, representing voltages to be applied to the brushless motor (4), according to a control instruction supplied from an upper control device (12) ;
a power conversion unit (32) which converts DC power to three-phase AC power based on the voltage instruction from the brushless motor control unit (302) and supplies the three-phase AC power to the brushless motor (4) ;
a coordinate transformation unit (305) which executes transformation electric current flowing into the brushless motor (4) into current values as current components on dc-qc-axes as rotational coordinate axes;
a position error calculation unit (306) which calculates and estimates a position error between d-q-axes as rotational coordinate axes and the dc-qc-axes by use of the voltage instruction outputted by the brushless motor control unit (302), the current values acquired by the coordinate transformation unit (305) and revolution speed for control of the brushless motor (4) ; and
a fault detection unit (308) which judges whether the brushless motor (4) is faulty or not based on the position error calculated by the position error calculation unit (306).

FIG. 1

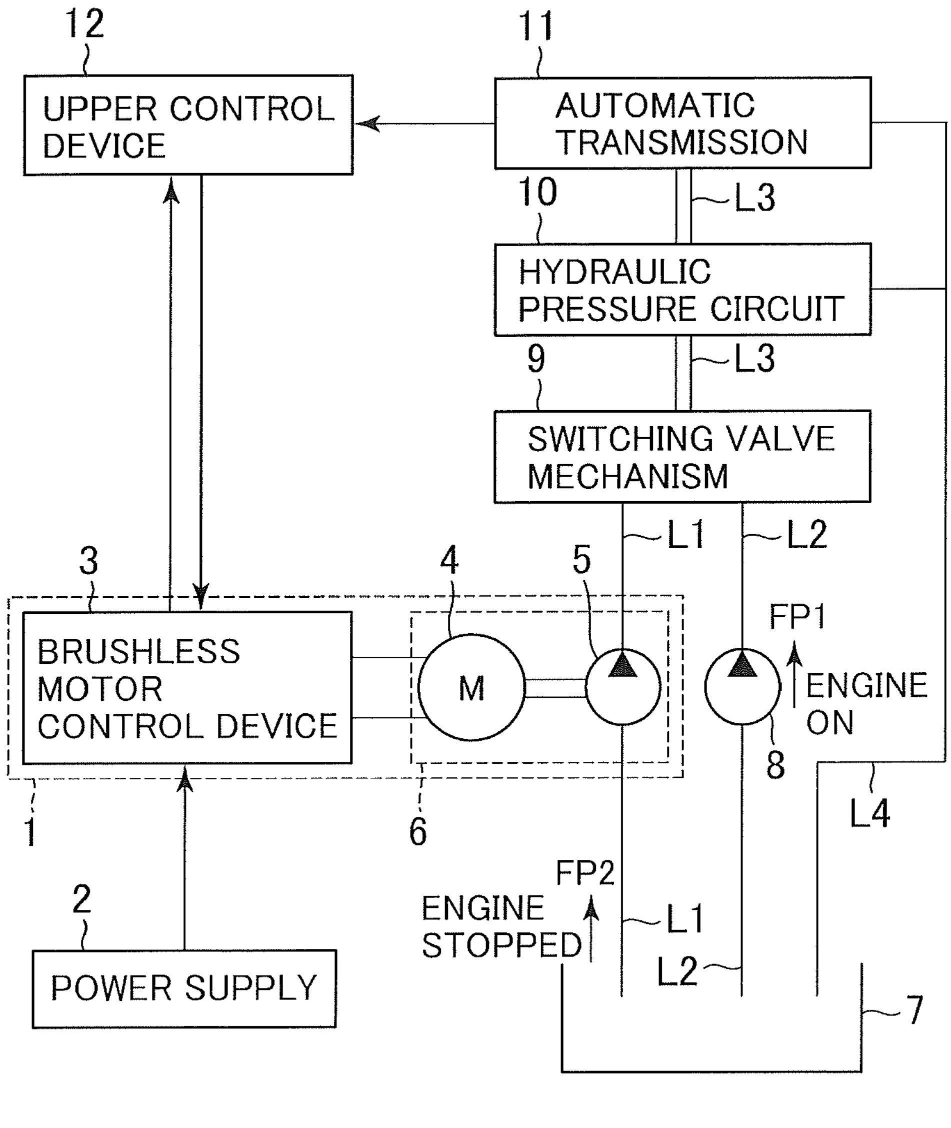
12
UPPER CONTROL DEVICE
11
AUTOMATIC TRANSMISSION
10
L3
HYDRAULIC PRESSURE CIRCUIT
9
L3
SWITCHING VALVE MECHANISM
L1
L2
3
4
5
FP1
BRUSHLESS MOTOR CONTROL DEVICE
M
ENGINE ON
8
1
6
L4
2
FP2
ENGINE STOPPED
L1
L2
7
POWER SUPPLY

FIG. 2

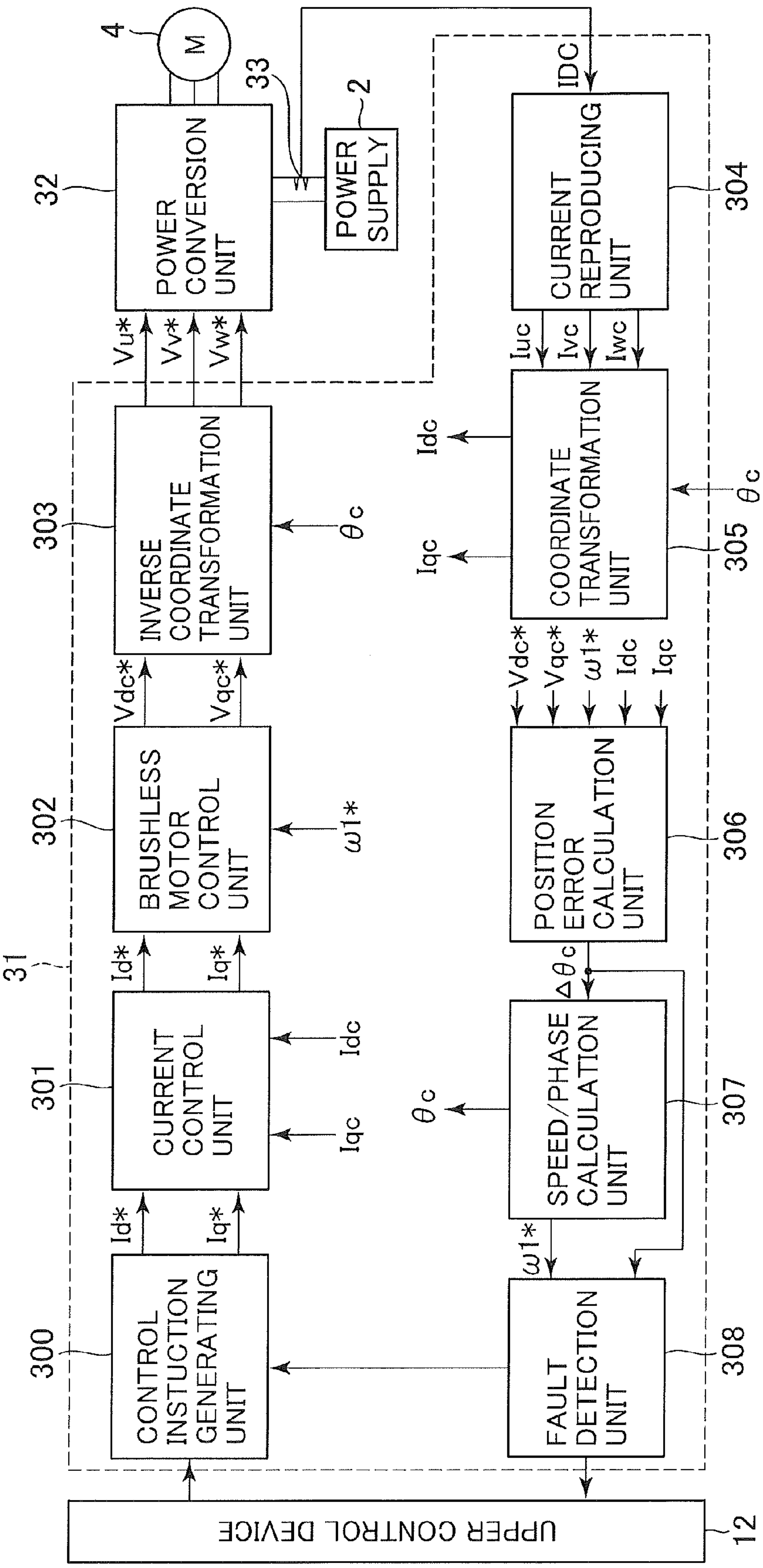
4
M
33
2
32
POWER CONVERSION UNIT
POWER SUPPLY
IDC
CURRENT REPRODUCING UNIT
304
Vu*
Vv*
Vw*
Iuc
Ivc
Iwc
303
INVERSE COORDINATE TRANSFORMATION UNIT
θc
Idc
Iqc
COORDINATE TRANSFORMATION UNIT
305
Vdc*
Vqc*
ω1*
302
BRUSHLESS MOTOR CONTROL UNIT
POSITION ERROR CALCULATION UNIT
306
31
Id*
Iq*
Δθc
301
CURRENT CONTROL UNIT
SPEED/PHASE CALCULATION UNIT
307
300
CONTROL INSTUCTION GENERATING UNIT
FAULT DETECTION UNIT
308
UPPER CONTROL DEVICE
12

FIG. 3

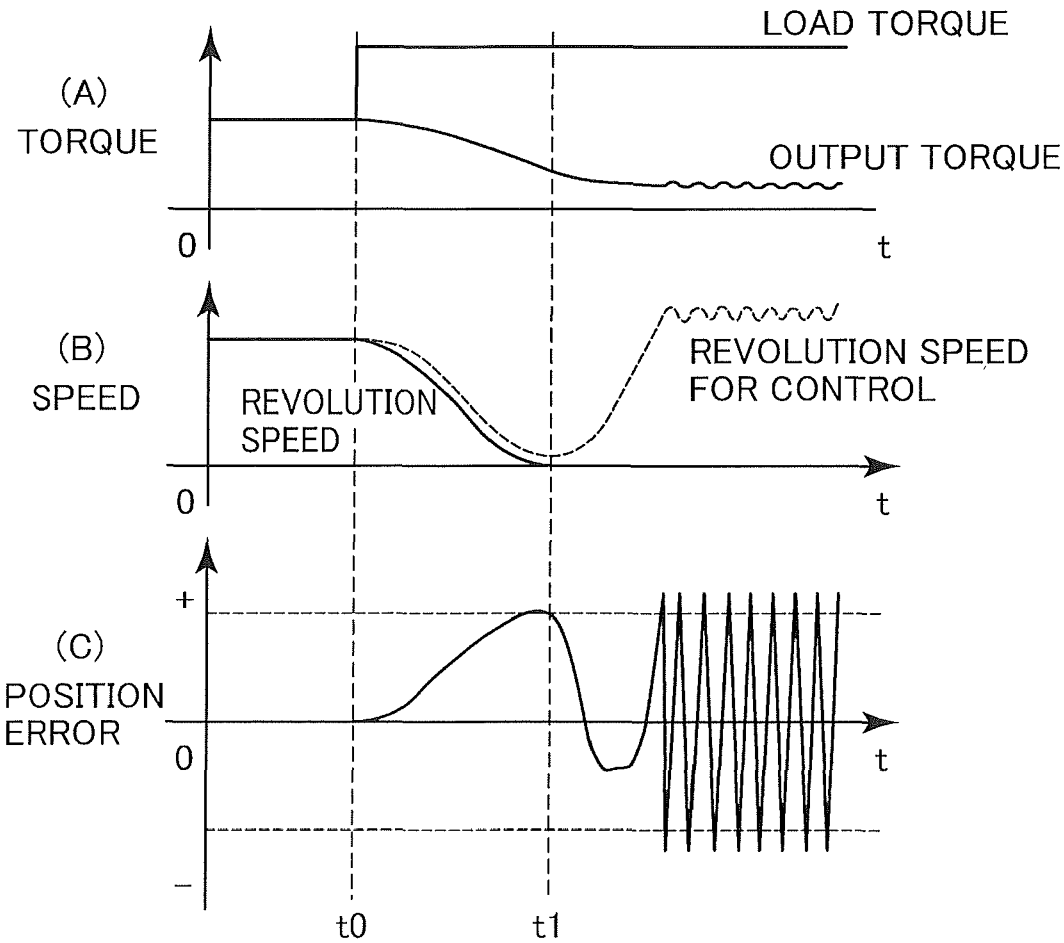
(A)
TORQUE
LOAD TORQUE
OUTPUT TORQUE
0
t
(B)
SPEED
REVOLUTION SPEED
REVOLUTION SPEED FOR CONTROL
0
t
(C)
POSITION ERROR
+
0
−
t
t0
t1

FIG. 4

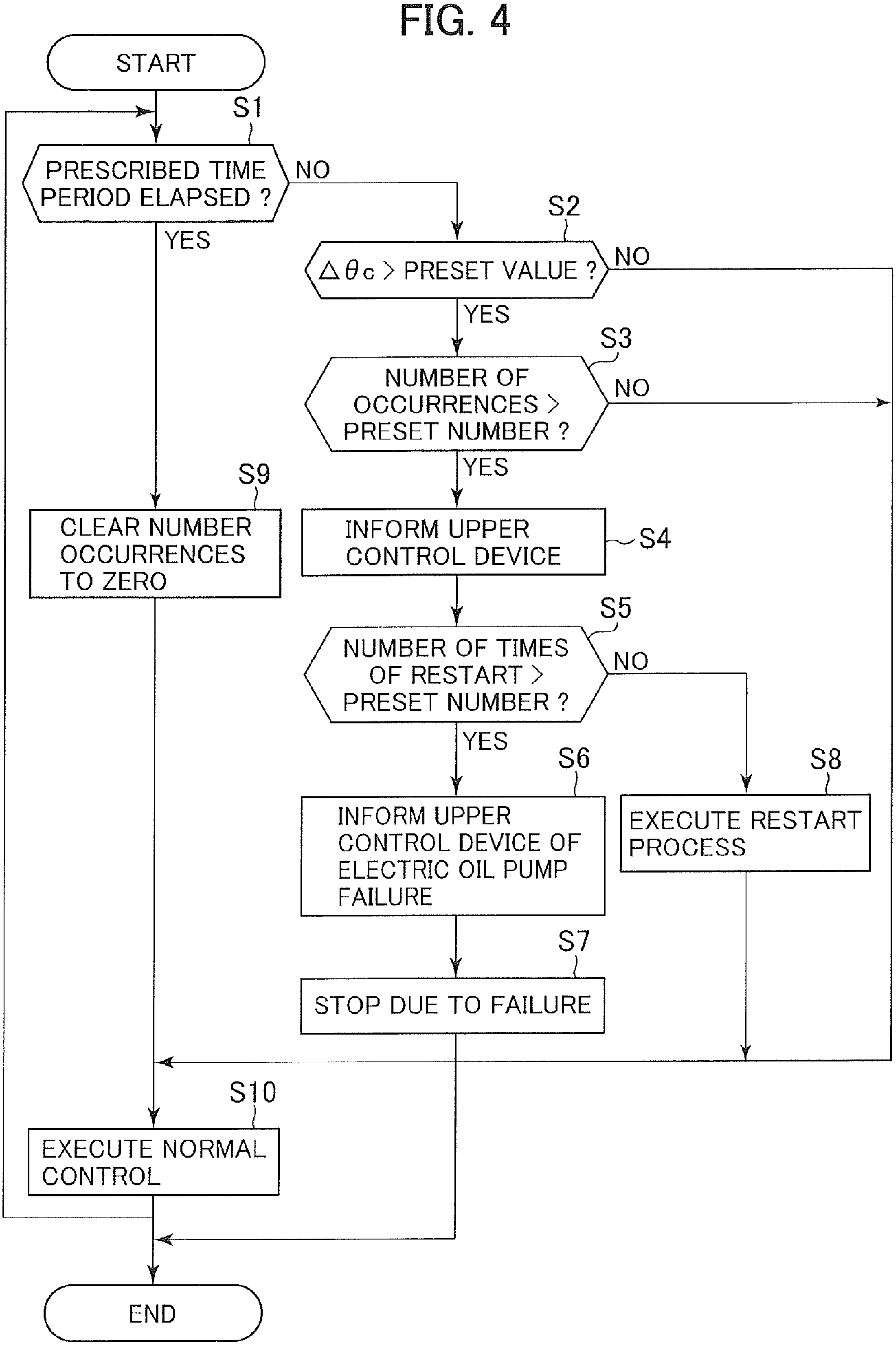
START
S1
PRESCRIBED TIME PERIOD ELAPSED ?
NO
YES
S2
$\Delta\theta c$ > PRESET VALUE ?
NO
YES
S3
NUMBER OF OCCURRENCES > PRESET NUMBER ?
NO
YES
S9
CLEAR NUMBER OCCURRENCES TO ZERO
INFORM UPPER CONTROL DEVICE
S4
S5
NUMBER OF TIMES OF RESTART > PRESET NUMBER ?
NO
YES
S6
INFORM UPPER CONTROL DEVICE OF ELECTRIC OIL PUMP FAILURE
S8
EXECUTE RESTART PROCESS
S7
STOP DUE TO FAILURE
S10
EXECUTE NORMAL CONTROL
END

FIG. 5

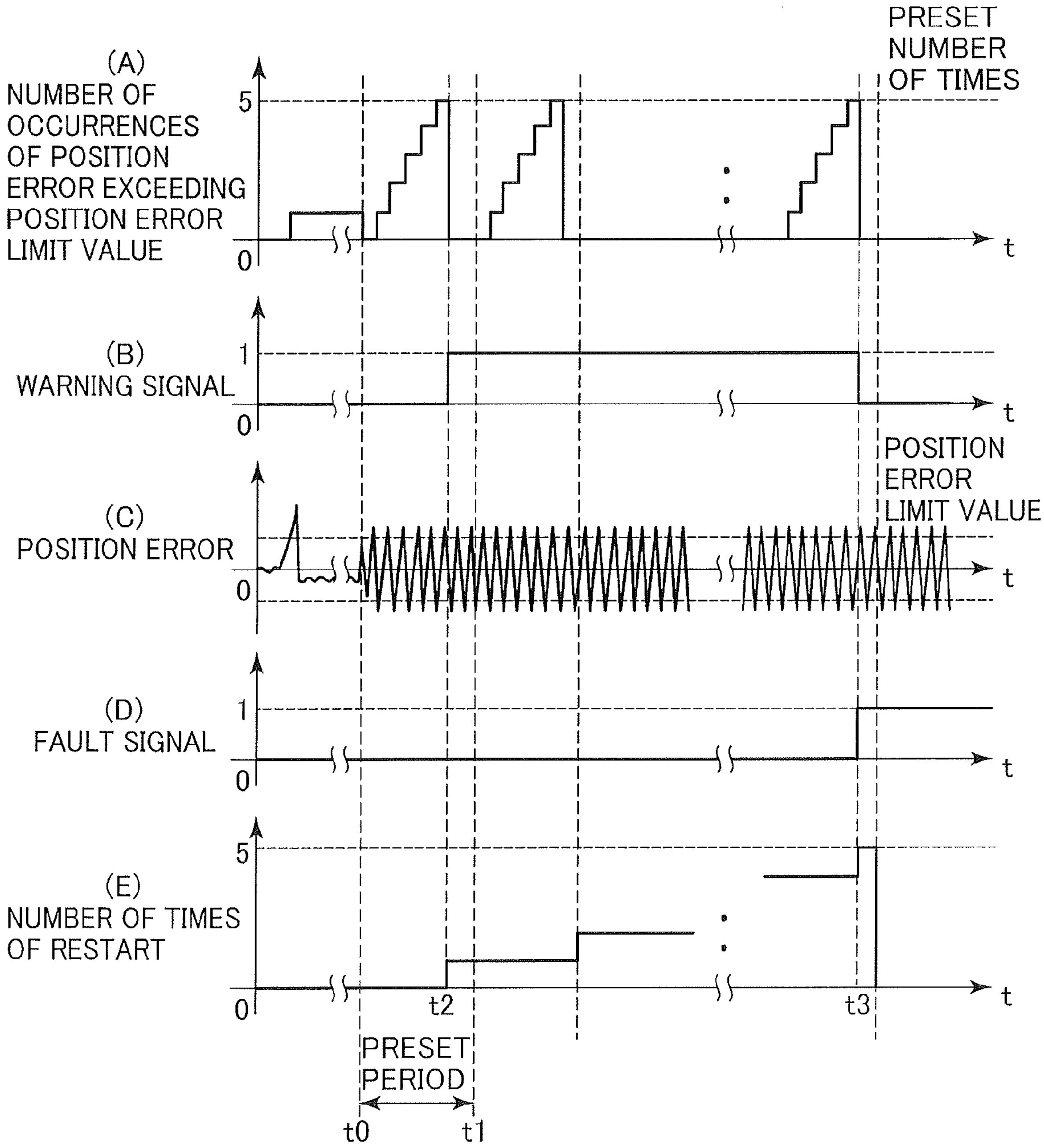
(A)
NUMBER OF OCCURRENCES OF POSITION ERROR EXCEEDING POSITION ERROR LIMIT VALUE
PRESET NUMBER OF TIMES
5
0
t
(B)
WARNING SIGNAL
1
0
t
(C)
POSITION ERROR
POSITION ERROR LIMIT VALUE
0
t
(D)
FAULT SIGNAL
1
0
t
(E)
NUMBER OF TIMES OF RESTART
5
0
t2
t3
t
PRESET PERIOD
t0
t1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001251889 A
- JP SHO611290 A